# EUROPEAN PATENT APPLICATION

(11) **EP 4 778 699 A1**
(43) Date of publication of application: **22.07.2026**
(21) Application number: 25152705.7
(22) Date of filing: 20.01.2025
(51) Int. Cl.: B29C 64/118, B29C 64/209, B33Y 10/00, B33Y 30/00, B33Y 40/00

(54) **A METHOD FOR PRINTING AND SEALING A NOZZLE**

(71) Applicant: Stick Tech OY, 20521 Turku (FI)
(72) Inventor: PRAKASH, Dhayakumar Rajan, 21110 Naantali (FI); KALPIO, Tomi, 20900 Turku (FI); KOSKI, Timo, 20810 Turku (FI); PRINSSI, Roosa, 20780 Kaarina (FI); SÄILYNOJA, Eija, 20660 Littoinen (FI)
(74) Representative: Laine IP Oy

(57) **Abstract**

A method for printing, comprising printing an object using a nozzle (10) to deliver a printing material (13) via a tip (22) of the nozzle; after the object has been printed, providing an amount of the printing material to the tip of the nozzle; and at least partially curing the amount of the printing material at the tip of the nozzle to seal (14) the nozzle.

## Description

### FIELD

The present invention relates to a method for printing, comprising printing an object using a nozzle to deliver a printing material via a tip of the nozzle. The present invention also relates to a printing head capable of carrying out the present method.

### BACKGROUND AND OBJECTS

Three-dimensional printing, commonly called 3D printing, is nowadays a widely used manufacturing method, along with other types of additive manufacturing. Most of these techniques use some kind of nozzle to deposit the printing material, followed by curing, cross-linking or another type of hardening of the printing material. A problem encountered with the conventional printers is that the nozzle tends to get clogged in an uncontrolled manner, leading to a nozzle that cannot be used, either not at all, or at least not easily, without a significant cleaning operation.

An aim of the present invention is thus to provide a method for sealing a nozzle of a printing head in a controlled manner, allowing it to be also easily un-sealed.

A further aim is to provide a printing head that can be used efficiently because its nozzle does not need significant cleaning in between prints.

### SUMMARY OF THE INVENTION

The invention is defined by the features of the independent claims. Some specific embodiments are defined in the dependent claims.

According to an aspect, there is provided a method for printing, comprising
- printing an object using a nozzle to deliver a printing material via a tip of the nozzle;
- after the object has been printed, extruding an amount of the printing material to the tip of the nozzle;
- at least partially curing the amount of the printing material at the tip of the nozzle to seal the nozzle.

According to another aspect, there is provided a printing head, comprising a nozzle for delivering a printing material, the nozzle comprising a tip and means for curing the printing material at the tip of the nozzle to form a seal of the nozzle tip.

### BRIEF DESCRIPTION OF THE DRAWINGS

Figures 1a-1c illustrate an embodiment of the present method.
Figures 2a-2c illustrate another embodiment of the present method.
Figures 3a and 3b illustrate a further embodiment of the present method.

### DETAILED DESCRIPTION

According to an aspect, there is provided a method for printing, comprising
- printing an object using a nozzle to deliver a printing material via a tip of the nozzle;
- after the object has been printed, providing an amount of the printing material to the tip of the nozzle;
- at least partially curing the amount of the printing material at the tip of the nozzle to seal the nozzle.

In the present method, once an object is printed, the tip of the nozzle is sealed by allowing a small amount of the printing material to exit the nozzle, and by curing the printing material at the tip of the nozzle, to seal the nozzle. This avoids the nozzle getting uncontrollably clogged, which would require significant cleaning before being able to be used again. Thus, in this method and printing head (as described below), the amount of material is provided to the tip of the nozzle, outside the nozzle.

In this description, by "curing" it is meant polymerisation and cross-linking, which is typically induced by external energy. According to an embodiment, the curing is carried out using heat or electromagnetic radiation, or a chemical initiator. Electromagnetic radiation comprises, i.a., visible light, ultraviolet light and infrared light. For example, the curing can be carried out by using ultraviolet light at wavelengths of approximatively 10-400 nm (such as extreme ultraviolet at 10-121 nm, far ultraviolet at 122-200 nm, middle ultraviolet at 200-300 n, and near ultraviolet at 300-400 nm), visible light at wavelengths of approximatively 380-750 nm or infrared light at wavelengths of approximatively 750 nm - 1 mm (such as far-infrared at 10 µm - 1 mm, mid-infrared at 2.5 -10 µm and near-infrared at 750 nm - 2.5 µm). In the present method, a second object is printed with the same printing head after some time, and the seal is removed before a further object is printed. According to an embodiment, the seal is removed using pressure of the printing material within the nozzle, making the seal to detach.

According to another embodiment, wherein the seal is removed using at least one of a blade, a grate, or a fibrous element cured on the tip of the nozzle. When a blade is used, the seal is cut off at the tip of the nozzle, allowing the printing material therein to exit the nozzle again. A grate may be used to grate or grind the nozzle off. A fibrous element, which may be for example a longitudinal fibre, a fibre bundle, or a strip of fabric may be used to cover the small amount of printing material at the tip of the nozzle, prior to curing this amount (as curing can be carried out through the fibrous element). Once printing is continued, the seal can be removed by simply pulling on the fibrous element. The fibrous element may be for example a metallic thread, or alternatively, a thread made of a polymer that does react with the printing material and in the conditions of curing of the printing material.

According to an embodiment, the amount of the printing material extruded to the tip of the nozzle is typically less than 5-10 % of the volume of the nozzle, wherein the volume of the nozzle is defined as the internal volume of the nozzle from its tip to the nozzle-barrel junction.

The method may further comprise providing an oxygenation prevention layer on the printing material at the tip of the nozzle, prior to the at least partial curing of the printing material. The oxygenation prevention layer may be for example a layer of nitrogen or other inert gas, that replaces oxygen near the tip of the nozzle. The oxygenation prevention layer may also be a material that surrounds the tip of the nozzle and is impermeable to oxygen, such as silicone-based gels, fluorinated polymers, paraffin-based materials and glycol-based barrier materials.

The method may further comprise measuring a pressure change within the nozzle, monitoring material flow characteristics and verifying seal integrity. The pressure change may be measured for example with a pressure sensor, the flow characteristics with a flow sensor and optical or pressure-based detectors may be used for verifying the integrity of the seal.

The printing material may be for example a dental resin, such as a photopolymerisable dental resin. The seal formed at the tip of the nozzle thus prevents polymerisation, i.e. curing, of the printing material within the nozzle. Such printing material may comprise, in addition to the dental resin, at least one of filler, fibre, initiator, and promoter. The resin may also comprise an active ingredient such as ion releasing material.

According to another aspect, there is provided a printing head, comprising
- a nozzle for delivering a printing material, the nozzle comprising a tip;
- means for providing a pre-defined amount of the printing material to the tip of the nozzle;
- means for curing the printing material at the tip of the nozzle to form a seal of the nozzle tip.

The present printing head may be part of a printer, a hand-held device or a robot for 3D printing, for example. The various means that can be used in connection with the present printing head may be either integral parts of the printing head or they may be separate parts arranged in connection with them, as best suits the particular use.

The present printing head is configured to carry out the above method, by comprising means for curing the printing material at the tip of the nozzle, after the means for providing a pre-defined amount of the printing material to the tip of the nozzle have carried out their task, i.e. provided a small amount of the printing material to the outside of the tip of the nozzle. These means for providing a pre-defined amount of the printing material to the tip of the nozzle can be for example a sensor for measuring the amount of printing material delivered through the tip of the nozzle. Other possible means for providing a pre-defined amount of the printing material to the tip of the nozzle can be selected from precision stepper motors with microstepping capability, volumetric flow sensors, viscometers (such as inline viscometers), pressure-based dispensing systems with feedback control or other pressure monitoring systems, weight-based dispensing systems and optical feedback systems monitoring material volume at nozzle tip.

Preferably, the printing head also comprises means for removing the seal of the nozzle tip, or means for removing the seal of the nozzle tip are arranged in connection with the printing head. These means for removing the seal of the nozzle tip may be for example at least one of a blade, a grate, or a fibrous element arranged to be cured on the tip of the nozzle combined with means for pulling the fibrous element. When a blade is used, it is typically arranged to move with respect to the nozzle, and when a grate is used, it can either be arranged to move with respect to the nozzle, or it can be made stationary and the nozzle is moved with respect to the grate. It is also possible to use sandpaper to grind the seal away from the nozzle's tip.

The fibrous element may be for example a thread, a fibre or a ribbon. When a fibrous element is used, its diameter or width (depending on the cross-sectional shape of the fibrous element), that is typically smaller than the diameter of the tip of the nozzle. For example, the diameter or width of the fibrous element may be at most 50 % of the diameter of the tip of the nozzle, in order to allow the printing material to surround the fibrous element, when the seal is being formed. This allows for secure removal of the seal, by pulling the fibrous element.

Furthermore, the printing head may comprise means for ensuring that the seal has been removed correctly, or again, such means may be arranged in connection with the printing head. Such means can be for example a camera, equipped with image analysis software, or a load cell that measures the pressure needed for delivering the printing material through the tip of the nozzle. If the pressure is higher than a pre-determined threshold value, the printing head or a connected means will alert the user that the seal has not been removed properly.

The printing head or the printer may also comprise means for detecting material degradation, such as an optical sensor, a temperature sensor and/or a rheological monitoring device. The printing head may for example comprise at least one of a pressure sensor for monitoring material flow resistance, an optical sensor for detecting material state changes and/or a flow sensor for measuring material delivery characteristics.

According to an embodiment, the nozzle is a coaxial nozzle comprising at least two concentric channels. The nozzle may have more than two concentric channels, such as three, four, five or six channels. The channels may be configured to deliver different materials, and the outermost channel may be configured to provide an oxygenation prevention material, if such material is used. The seal may in this case be formed of the printing material that has been cured under the action of the oxygenation prevention material delivered via the outer channel. The outer channel may also deliver a material that has a different curing mechanism than the printing material itself. For example, the material delivered via the outer channer may be cured at a different wavelength of UV or IR. It is also possible that only the material delivered via the outer channel is cured, allowing the printing material itself to remain in non-cured form. Such an alternative would ensure that no remains of solidified printing material is left when the printing is started anew.

The present description also relates to a method for sealing a printing nozzle, comprising providing an amount of the printing material to the tip of the nozzle and at least partially curing the amount of the printing material at the tip of the nozzle to seal the nozzle. The various embodiments and options described above apply *mutatis mutandis* to this method.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Furthermore, the described features, structures, or characteristics may be combined in any suitable manner in one or more embodiments. In the description, numerous specific details are provided, such as examples of lengths, widths, shapes, etc., to provide a thorough understanding of embodiments of the invention.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", i.e. a singular form, throughout this document does not exclude a plurality.

### DETAILED DESCRIPTION OF THE DRAWINGS

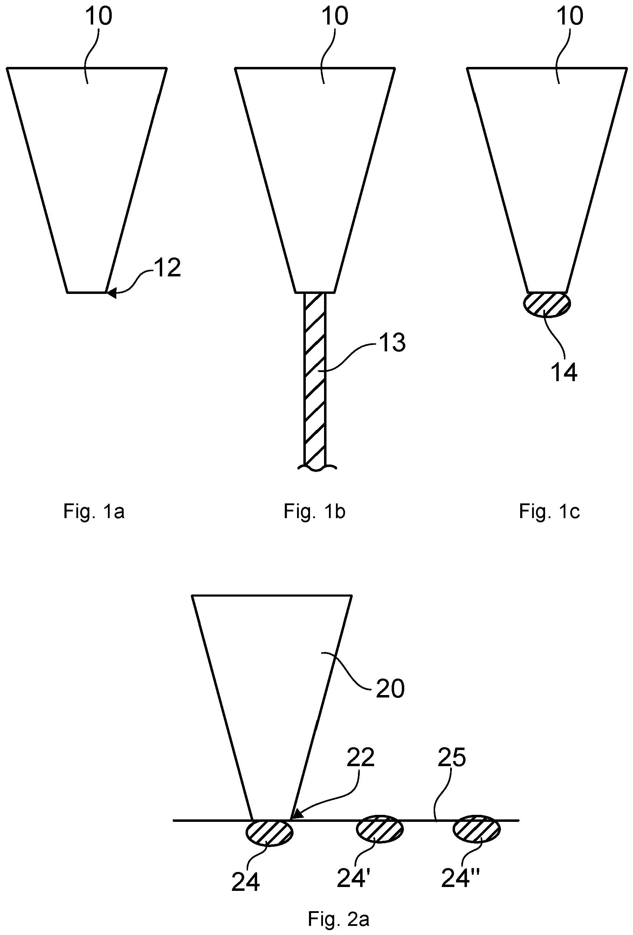

Figures 1a-1c illustrate an embodiment of the present method. Figure 1a shows a nozzle 10 of a printer, without any printing material. A tip 12 of the nozzle 10 is at the lower part of the nozzle. Some printing material 13 coming out of the nozzle 10 is shown in Figure 1b, i.e. the printing is ongoing. Figure 1c shows a seal 14 made of the printing material 13, once the printing has been completed. As can be seen, the seal 13 covers the tip 12 of the nozzle 10, thus preventing the printing material that is inside the nozzle, from curing and thereby clogging the nozzle.

Figures 2a-2c illustrate another embodiment of the present method, namely some embodiments of the means for removing the seal from the nozzle. In Figure 2a, a thread 25 has been arranged at the tip 22 of the nozzle once the printing is finished. Thereafter, a seal 24 has been formed, leaving the thread 25 within the seal 24. The thread 25 thus has a diameter that is smaller than the diameter of the tip 22 of the nozzle 1. Figure 2a also shows two seals 24' and 24" that have been removed from the tip 22 of the nozzle 20.

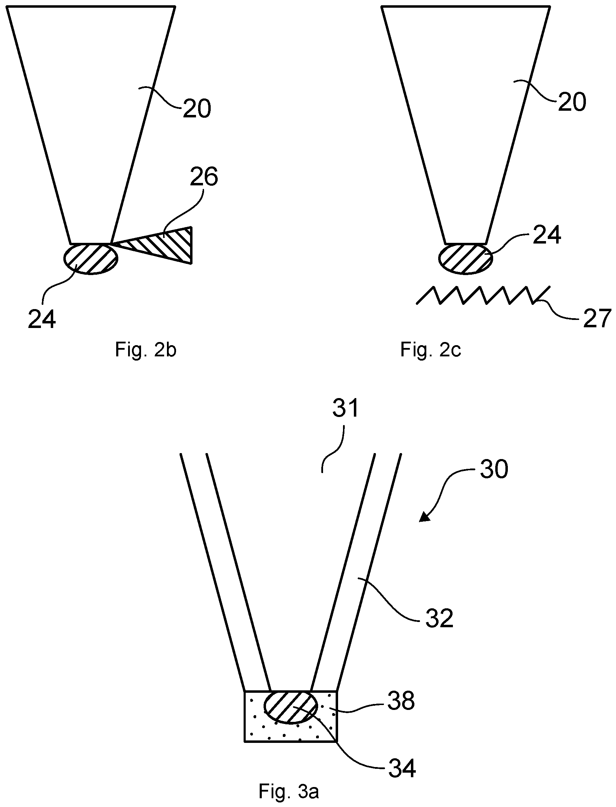

Figure 2b shows a nozzle 20 wherein a seal 24 has been formed at its tip 22, as well as a blade 26, which, when moved towards the left in the Figure, will cut off the seal 4. Figure 2c shows also a nozzle 20 wherein a seal 24 has been formed at its tip 22, as well as a grate 27, which can be used to grind the seal 24 away.

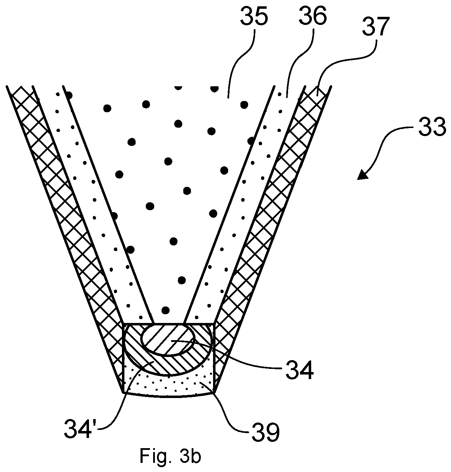

Figures 3a and 3b illustrate a further embodiment of the present method, using a coaxial nozzle with more than one channel. In Figure 3a, the nozzle 30 has two coaxial channels, an inner channel 31 and an outer channel 32. The seal 34 formed of the printing material has been cured under the action of the material 38 delivered via the outer channel 32.

Figure 3b illustrates another embodiment, using a coaxial nozzle 33 with three channels, namely an inner channel 35, a middle channel 36 and an outer channel 37. Some of the printing material provided by the inner channel 35 as well as some printing material provided by the middle channel 36 have formed a two-layered seal 34, 34', which has then been surrounded by a protective layer 39.

### EXPERIMENTAL PART

The present method was tested as follows.

Objects were 3D printed using a deposition-based 3D printer, Brinter ONE.

The print material consisted of the following components.

Urethane dimethacrylate (UDMA): Esschem X8507000, batch 819-340, as resin. Triethylene glycol dimethacrylat (TEGDMA): Aldrich 261548, batch STBF1113V, as resin.

Phenylbis (2,4,6-trimethylbenzoyl)-phosphine oxide (BAPO): Aldrich 511447, batch MKCN5782, as initiator.

N, N-dimethylaniline (DMA): Aldrich 234907, batch BCCC3073, as promoter. Camphorquinone (CQ): Fluka 53960, batch BCBQ5255V, as initiator.

Schott Ultrafine G018-053 0.7 µm, batch SIL19491, as filler.

The print material was prepared by mixing UDMA/TEGDMA 80/20 -monomer mix, 0.7 wt-% CQ, 0.7 wt-% DMA and 0.05 wt-% HQ, in a magnetic stirrer. The filler was thereafter added to this resin mixture in a dual asymmetric centrifugal mixer (Hauschild SpeedMixer DAC 400.1 VAC-P). Different ratios of the resin mixture and filler were tested, namely 50/50, 40/60 and 30/70.

In a second test series, the same components, amounts and procedure were tested, except that BAPO instead of CQ.

Further, commercial resins, namely G-aenial^{™} Flo from GC Corporation (ref 900711 230310A) in shades a1 and a4 shade were tested.

The present method worked well with all the printing materials, the seal was formed by curing the printing material using UV-light. In each case, the seal could be easily removed by hand, with a blade or using a metallic thread cured within the seal.

## Claims

1. A method for printing, comprising
- printing an object using a nozzle to deliver a printing material via a tip of the nozzle;
- after the object has been printed, providing an amount of the printing material to the tip of the nozzle;
- at least partially curing the amount of the printing material at the tip of the nozzle to seal the nozzle.

2. The method according to claim 1, wherein the curing is carried out using heat or electromagnetic radiation or a chemical initiator.

3. The method according to any one of the preceding claims, wherein the seal is removed before a further object is printed.

4. The method according to claim 3, wherein the seal is removed using at least one of a blade, a grate, or a fibrous element cured on the tip of the nozzle.

5. The method according to claim 3, wherein the seal is removed using pressure of the printing material within the nozzle.

6. The method according to any one of the preceding claims, further comprising providing an oxygenation prevention layer on the printing material at the tip of the nozzle, prior to the at least partial curing of the printing material.

7. The method according to any one of the preceding claims, further comprising
- measuring a pressure change within the nozzle;
- monitoring material flow characteristics; and
- verifying seal integrity.

8. A printing head, comprising
- a nozzle for delivering a printing material, the nozzle comprising a tip;
- means for providing a pre-defined amount of the printing material to the tip of the nozzle;
- means for curing the printing material at the tip of the nozzle to form a seal of the nozzle tip.

9. The printing head according to claim 8, further comprising means for removing the seal of the nozzle tip.

10. The printing head according to claim 9, wherein the means for removing the seal of the nozzle tip is at least one of a blade, a grate, or a fibrous element arranged to be cured on the tip of the nozzle combined with means for pulling the fibrous element.

11. The printing head according to any one of the claims 8-10, wherein the nozzle is a coaxial nozzle comprising at least two concentric channels.

12. The printing head according to any one of the claims 8-11, further comprising at least one of means for detecting material degradation, a temperature sensor and a rheological monitoring device.
